# EUROPEAN PATENT APPLICATION

(11) **EP 1 302 883 A1**
(43) Date of publication of application: **16.04.2003**
(21) Application number: 01938570.7
(22) Date of filing: 08.06.2001
(51) Int. Cl.: G06F 17/60

(54) **VIEWER HISTORY MANAGING APPARATUS AND METHOD, AND VIEWER HISTORY PROVIDING SYSTEM**

(30) Priority: 17.07.2000 JP 2000216612; 02.05.2001 JP 2001135263
(71) Applicant: Zion, Ltd., Minato-ku, Tokyo 105-0003 (JP)
(72) Inventor: KOBAYASHI, Kimiyuki, Zion, Ltd., Minato-ku, Tokyo 105-0003 (JP); KOBAYASHI, Eriko, Zion, Ltd., Minato-ku, Tokyo 105-0003 (JP); NARITA, Mamoru, Zion, Ltd., Minato-ku, Tokyo 105-0003 (JP); YAMAMOTO, Hiroji, Zion, Ltd., Minato-ku, Tokyo 105-0003 (JP)
(74) Representative: Becker Kurig Straus
(86) International application number: JP0104853
(87) International publication number: WO02007023

(57) **Abstract**

A viewer history management apparatus for managing a state in which a viewer terminal 50 having a browser function views a Web site 40 connected to the an Internet 30 is provided, which comprises: a customer management apparatus 60 for managing customer registration data; a content supply management apparatus 70 for managing content supply states relating to the Web site 40; an access validation monitoring apparatus 80 for managing connection validation information relating to connections to the Internet; a viewed contents monitoring apparatus 90 for managing Web site 40 access histories of the viewer terminal 50; a purchase history information management apparatus 110 for managing purchase history information of a customer operating the viewer terminal 50; and a viewer behavior collection and analysis apparatus 120 for collecting attribute information relating to the viewer terminal 50 accessing the Web site 40 from the access validation monitoring apparatus 80.

## Description

### TECHNICAL FIELD

The present invention relates to an apparatus for managing the history of a viewer who views contents provided from a Web site through the Internet. In particular, the present invention relates to improvements in the collecting and separating into categories of static information such as user information and content provider information and dynamic information such as access system information and purchasing histories. The present invention also relates to an apparatus for providing content providers with the marketing information they desire.

### BACKGROUD ART

Conventionally, when product or service advertisements are presented to the audience of such mass media as television, radio, newspapers, and magazines, the audience rating or number of readers is used as an important index. Here, by stimulating the audience or a reader through an advertisement, purchases of the product or service can be promoted. Moreover, sales promotion using mass media is widely used in the field of mass consumer goods in which a heightened brand image is important as a sales strategy such as cosmetics, household articles, comestibles, and automobiles.

On the other hand, in fields in which product quality and a rapid response when a product breaks down attracts customers, such as the field of production equipment, sales efficiency can be heightened by presenting customers with advertisements for new products using media intended for a limited audience such as industry bulletins. Furthermore, customers are dealt with by professional people in charge of sales and sales agents. In industrial fields whose market base is a comparatively narrow range of customers, because the mass media advertisement unit price is relatively expensive and an increase in the number of orders received from customers cannot be guaranteed even if a large amount of money is invested in advertisement and publicity expenses, non-discriminatory advertising to customers has not been particularly widely used.

However, due to the development in recent years of information communication technology, the managing of customers has been simplified. For example, oil refiner-distributors, large scale retail outlets, department stores, and the like issue a store card ued in order to encourage customers to buy exclusively from the card issuer. In addition, many businesses find it useful to send email regularly to customers and use the replies from customers for the development of new products. Furthermore, advertisements are also presented to customers by delivering banner advertisements to Web sites via the Internet and encouraging viewers of those Web sites to view the Web site of the owner of the banner advertisement.

However, because, conventionally, banner advertisements are statically attached to the home page of a Web site, they have the same problem as conventional advertisements that use mass media in that they do not allow the state of viewers of the Web site to be ascertained. For example, in the case of a web site that has 100,000 viewer hits per day, if the viewing time per viewer is taken as 5 minutes, in spite of there being time periods with a large number of viewers and time periods with a small number of viewers, the average number of viewers at any particular moment is 350. If the interests and concerns of these viewers could be known, it would be invaluable for efficient advertisement delivery and Web site marketing.

The present invention was conceived in order to solve the above problem and it is an aim thereof to provide a viewer history management apparatus that can be utilized in the efficient delivery of advertisements, the promotion of sales, and the marketing of web sites by collecting connection time information, interests, and concerns of viewers viewing the home page of a Web site.

### DISCLOSURE OF THE INVENTION

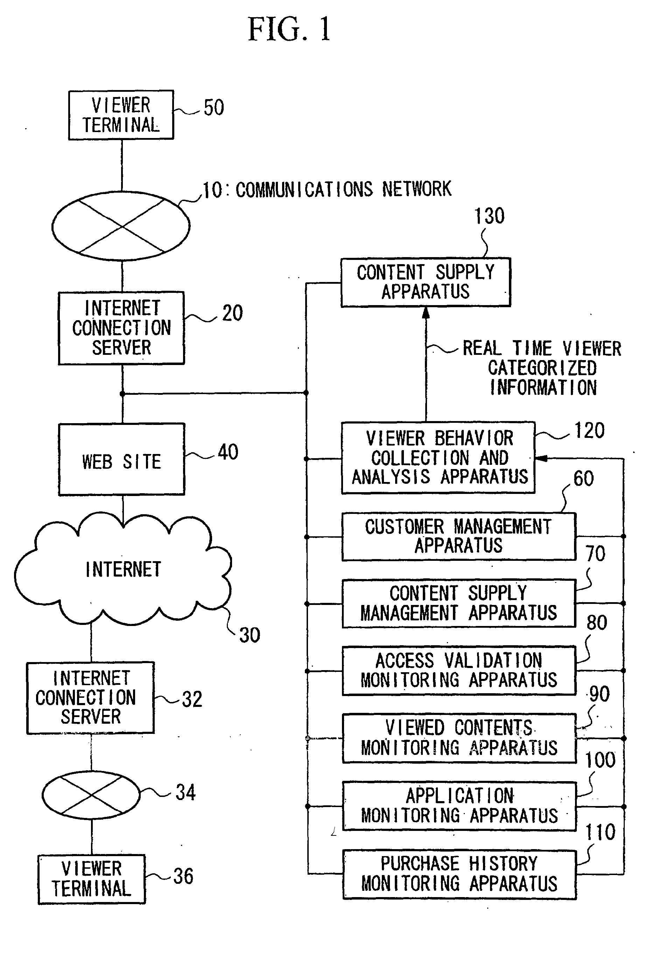

In order to solve the above described problem, the viewer history management apparatus of the present invention is appropriate for use by Internet service providers. Internet service providers are businesses that enable viewer terminals to connect to the Internet and, for example, the Web, applications, and electronic malls are included therein. As is shown in Fig. 1, the viewer history management apparatus of the present invention is an apparatus for managing a state in which a viewer terminal 50 having a browser function views a Web site 40 to which it is connected via an Internet connection server 20, and comprises: a customer management apparatus 60 for managing customer registration data relating to the viewer terminal 50; a contents supply management apparatus 70 for managing contents supply states relating to the Web site 40; an access validation monitoring apparatus 80 for managing connection validation information relating to connections to the Internet by the viewer terminal 50; a viewed contents monitoring apparatus 90 for managing Web site 40 access histories of the viewer terminal 50; a purchase history information management apparatus 110 for managing purchase history information of a customer operating the viewer terminal 50; and a viewer behavior collection and analysis apparatus 120 for collecting attribute information that is created by associating static information of the viewer terminal 50 accessing the Web site 40 with dynamic information relating to the behavior of the viewer of the viewer terminal 50 from the access validation monitoring apparatus 80.

In an apparatus that is structured in this manner, the Internet connection server 20 and the Web site 40 are connected by a dedicated network such as a LAN. Using the access validation monitoring apparatus 80, it is possible to manage connection validation information relating to connections to the Internet by the viewer terminal 50. The customer management apparatus 60 manages customer registration data relating to the viewer terminal 50, while the contents supply management apparatus 70 manages contents supply states relating to the Web site 40 and both sets of information are static information that do not vary over short term time periods. The viewed contents monitoring apparatus 90 manages the access history by the viewer terminal 50 to the Web site 40, which is dynamic information relating to the behavior of the viewer operating the viewer terminal 50 that does vary over short term time periods. The viewer behavior collection and analysis apparatus 120 collects attribute information relating to the viewer terminal 50 accessing the Web site 40 from the access validation monitoring apparatus 80. The collected attribute information is processed as marketing information and is then delivered to an optional medium. It is preferable if a structure is employed in which the viewer behavior collection and analysis apparatus 120 collects attribute information created by associating static information of the viewer terminal 50 with dynamic information relating to the behavior of the viewer of the viewer terminal using at least one of the customer management apparatus 60, the contents supply management apparatus 70, the viewed contents monitoring apparatus 90, and the purchase history monitoring apparatus 110. The collected information may then be processed as marketing information and delivered to an optional medium.

In order to solve the above described problem, the viewer history management apparatus of the present invention is appropriate for use by Application service providers. Application service providers are mainly businesses that provide applications and may, for example, be independent systems that do not depend on Internet service providers or businesses affiliated to an Internet service provider. As is shown in Fig. 1, the viewer history management apparatus of the present invention is an apparatus for managing a state in which a viewer terminal 36 having a browser function views a Web site 40 connected to the Internet 30, and comprises: a customer management apparatus 60 for managing customer registration data relating to the viewer terminal 36; a contents supply management apparatus 70 for managing contents supply states relating to a Web site 40; a viewed contents monitoring apparatus 90 for managing Web site 40 access histories of the viewer terminal 36; a purchase history information management apparatus 110 for managing purchase history information of a customer operating the viewer terminal 36; and a viewer behavior collection and analysis apparatus 120 for collecting attribute information that is created by associating static information of the viewer terminal 36 accessing the Web site 40 with dynamic information relating to the behavior of the viewer of the viewer terminal using at least one of the customer management apparatus 60, the contents supply management apparatus 70, the viewed contents monitoring apparatus 90, and the purchase history monitoring apparatus 110.

In the apparatus that is structured in this manner, the viewer terminal 36 is connected to the Internet 30 via the Internet connection server 32. The Internet connection server 32 and the Web site 40 are connected by a dedicated network such as the Internet 30 and differ from the first aspect in that Internet connection validation information of the viewer terminal 36 is not managed using the access validation monitoring apparatus 80. The viewer behavior collection and analysis apparatus 120 collects attribute information that is created by associating static information of the viewer terminal 50 with dynamic information relating to the behavior of the viewer of the viewer terminal using at least one of the customer management apparatus 60, the contents supply management apparatus 70, the viewed contents monitoring apparatus 90, the application monitoring apparatus 100, and the purchase history monitoring apparatus 110. The collected information is then processed as marketing information and delivered to an optional medium.

It is preferable if the viewer behavior collection and analysis apparatus 120 retrieves from the attribute information static information corresponding to dynamic information that meets predetermined retrieval conditions, and also retrieves from attribute information dynamic information corresponding to static information that meets predetermined retrieval conditions. If this structure is employed, members forming a specific categorized market having static information corresponding to predetermined dynamic information and dynamic information corresponding to predetermined static information can be extracted. Moreover, it is more effective as a business strategy if a structure is employed in which a contents supply means is provided for providing viewer services using an intranet or the Internet such-as the delivery of predetermined contents or the delivery of surveys, electronic mail, and advertisements in accordance with the retrieval conditions to viewer terminals 50 that correspond to the static information or dynamic information retrieved by the viewer behavior collection and analysis apparatus 120. Furthermore, if a structure is employed in which a predetermined viewer terminal 50 that is accessing the Web site 40 is provided with contents delivery validation means for validating the delivery of the contents of the Web site 40 to the predetermined viewer terminal 50 based on the static information and the dynamic information in the viewer terminal 50, then it is possible for contents to be delivered only when access is made from a viewer terminal 50 having specific static information and dynamic information. Moreover, if a structure is employed in which Web sites currently being viewed by the viewer terminal 50 are identified by the access validation monitoring apparatus 80, it becomes possible to deliver predetermined contents or deliver surveys, electronic mail, or advertisements in accordance with retrieval conditions to banner advertisement columns or the like provided on the Web site currently being viewed.

In order to solve the above described problem, the viewer history management method of the present invention is a method for managing a state in which a viewer terminal having a browser function views a Web site to which it is connected via an Internet connection server, and has the following steps.
1. A step in which customer registration data relating to the viewer terminal is registered in advance.
2. A step in which content supply states relating to the Web site are registered in advance.
3. A step in which connection validation information relating to connections to the Internet by the viewer terminal are managed.
4. A step in which Web site access histories of the viewer terminal are managed.
5. A step in which purchase history information of a customer operating the viewer terminal is managed.
6. A step in which attribute information that is created by associating static information of the viewer terminal accessing the Web site with dynamic information relating to the behavior of the viewer of the viewer terminal is collected from the access validation monitoring apparatus and then delivered.

In order to solve the above described problem, the viewer history providing apparatus of the present invention is appropriate for use by content service providers. As is shown in Fig. 1, the viewer history providing apparatus of the present invention is an apparatus for providing attribute information of a viewer who uses the viewer terminal to a content supply apparatus 130 that supplies contents of WWW pages to the viewer terminals 50 and 36 via the Internet, and comprises: a customer management apparatus 60 for managing customer registration data relating to the viewer terminal; a contents supply management apparatus 70 for managing content supply states relating to the Web site; an access validation monitoring apparatus 80 for managing connection validation information relating to connections to the Internet by the viewer terminal; a viewed contents monitoring apparatus 90 for managing Web site access histories of the viewer terminal; a purchase history information management apparatus 110 for managing purchase history information of a customer operating the viewer terminals 50 and 36; and a viewer behavior collection and analysis apparatus 120 for collecting attribute information that is created by associating static information of the viewer terminal accessing the Web site with dynamic information relating to the behavior of the viewer of the viewer terminal from the access validation monitoring apparatus.

### BRIEF DESCRIPTION OF THE DRAWINGS

Fig. 1 is a structural block diagram for explaining an embodiment of the present invention;
Fig. 2 is a view for explaining relationships between the viewer behavior collection and analysis apparatus and the customer management apparatus, the contents supply management apparatus, the access validation monitoring apparatus, the viewed contents monitoring apparatus, the application monitoring apparatus, and the purchase history monitoring apparatus;
Fig. 3 is an explanatory view of attribute information collected by the viewer behavior collection and analysis apparatus;
Fig. 4 is an explanatory view showing the supply of marketing information from the viewer behavior collection and analysis apparatus to the contents supply apparatus;
Fig. 5 is an explanatory view showing the supply of marketing information with special attention paid to the protection of privacy; and
Fig. 6 is an explanatory view of a user promotion apparatus.

### BEST MODES TO CARRY OUT THE INVENTION

Preferred embodiments of the present invention will now be described using the accompanying drawings.

Fig. 1 is a structural block diagram for explaining a preferred embodiment of the present invention. In Fig. 1, a communications network 10 includes public telephone lines, optical fibers, radio telephone networks, satellite communication networks, local area networks (LAN), and the like. Internet connection servers 20 and 32 are business servers that perform Internet connection services for the viewer terminals 50 and 36 and are installed internally in groups having a large number of members such as large businesses. In small businesses such as petty enterprises and for individuals, they form contracts with Internet service providers. The Internet connection server 20 is connected by a dedicated line such as a LAN to a Web site 40. If, for example, a communications business is also engaged in operating an Internet connection server, then, an electronic mall site or the like operated by the communications business can also be established on the communications business Web site. The Internet connection server 32 and the Web site 40 are connected to the Internet 30 via normal communication line 34.

The Web site 40 is an organic aggregate of world wide web (WWW) pages. Each page is described, for example, by hyper text markup language (HTML), extensible markup language (XML), extensible HTML (XHTML), and wireless markup language (WML) and has a uniform resource locator (URL) address. The viewer terminal 50 is a personal computer with a built-in browser function or a compact HTML or wireless access protocol (WAP) portable telephone and is connected to the Internet 30 or Web site 40 via the Internet connection server 20. The viewer terminal 36 is a personal computer with a built-in browser function or a compact HTML or wireless access protocol (WAP) portable telephone and is connected to the Internet 30 via the Internet connection server 32.

The customer management apparatus 60, the content supply management apparatus 70, the access validation monitoring apparatus 80, the viewed contents monitoring apparatus 90, the application monitoring apparatus 100, the purchase history monitoring apparatus 110, and the viewer behavior collection and analysis apparatus 120 are all servers of various types connected to a dedicated line of the Internet connection server 20, and are each connected to the Internet 30. Each apparatus is described below in detail. A content supply apparatus 130 receives categorized information of the viewer terminals 50 and 36 that are viewing the Web site 40 from the collected information of the viewer behavior collection and analysis apparatus 120.

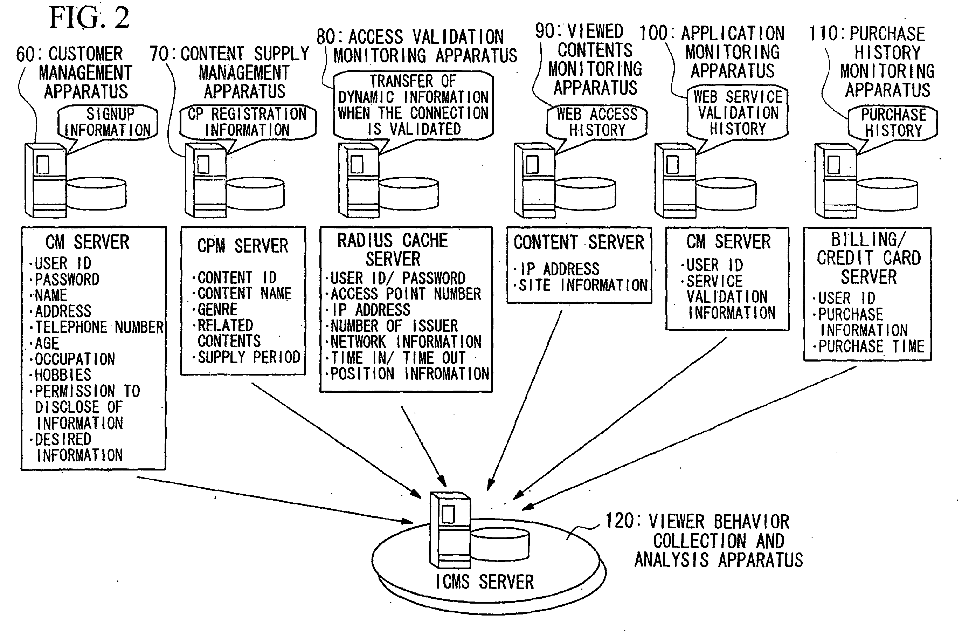

Fig. 2 is a view for explaining the relationships between the viewer behavior collection and analysis apparatus and the customer management apparatus, the contents supply management apparatus, the access validation monitoring apparatus, the viewed contents monitoring apparatus, the application monitoring apparatus, and the purchase history monitoring apparatus. The customer management apparatus 60 manages customer registration data of the viewer terminals 50 and 36 and has categories that include, for example, user ID, password, name, address, telephone number, age, occupation, hobbies, information disclosure permission, and desired information. The content supply management apparatus 70 is also known as a content provider management (CPM) server and manages content supply states relating to the Web site 40. It is provided with categories including the name of the contents provider company, address and telephone number, content ID, content name, various genre such as travel information and restaurant information, related contents, and supply period.

The access validation monitoring apparatus 80 manages connection validation information of the viewer terminal 50 to the Internet via the Internet connection terminal server 20 and may be formed by a radius cache server, for example. The access validation monitoring apparatus 80 contains user ID/ password, access point number, Internet protocol (IP) address, number of issuer, network information, time in/ time out, and position information. The viewed contents monitoring apparatus 90 manages the access history of access to the Web site 40 by the viewer terminals 50 and 36 and contains IP addresses and site information. The application monitoring apparatus 100 contains user ID and service validation information. The purchase history monitoring apparatus 110 is formed by a credit card server or the like and contains purchase related information including user ID, purchased articles, purchase price, and the store from which the purchase was made, as well as the time of the purchase. The viewer behavior collection and analysis apparatus 120 collects attribute information that is created by associating information from the access validation monitoring apparatus 80 such as the user IDs for the viewer terminals 50 and 36 that access the Web site 40 with information from the customer management apparatus 60, the content supply management apparatus 70, the viewed contents monitoring apparatus 90, the application monitoring apparatus 100, and the purchase history monitoring apparatus 110 that relates to the behavior of the viewers using the viewer terminals 50 and 36.

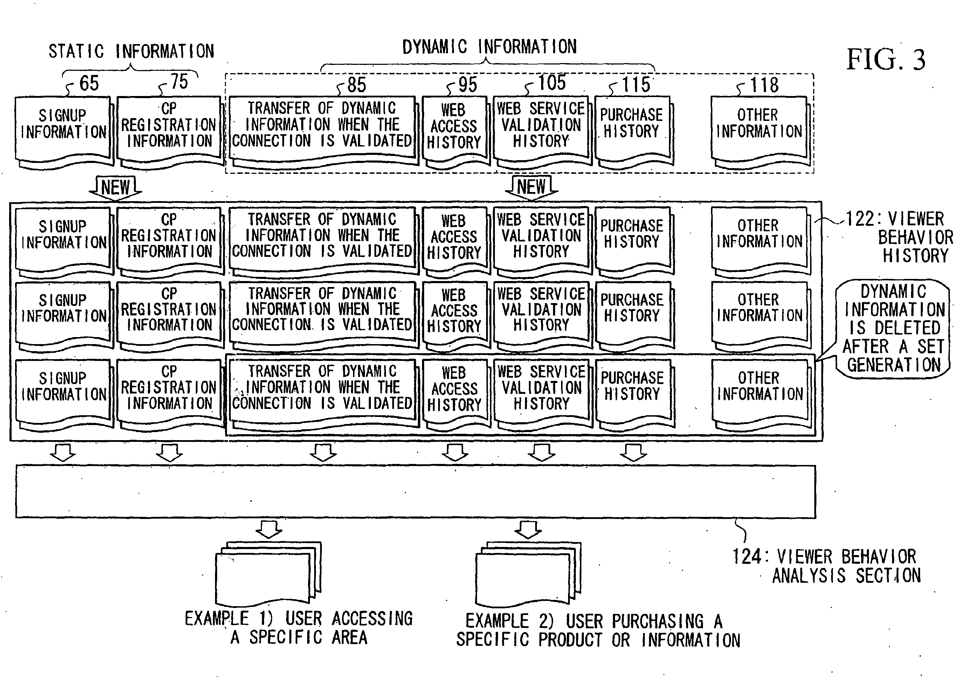

The operation of an apparatus having the above described structure will now be described. Fig. 3 is an explanatory view of attribute information collected by the viewer behavior collection and analysis apparatus. The viewer behavior collection and analysis apparatus 120 has a viewer behavior history file 122 in which the viewer behavior history is stored for a fixed generation and a viewer behavior analysis section 124 that analyses the viewer behavior for use in marketing operations and the like. For example, if the viewer terminals 50 and 36 access the Web site 40 via the Internet connection servers 20 and 32, signup information (customer registration data) 65 is collected from the customer management apparatus 60 in the viewer behavior history file 122, and content provider (CP) registration information (content supply state) 75 is collected from the content supply management apparatus 70 in the viewer behavior history file 122. The signup information 65 and the CP registration information 75 are static information that does not vary over the short term.

The transfer of dynamic information 85 when a connection is being validated from the access validation monitoring apparatus 80 to the viewer behavior history file 122 is performed. Dynamic information is information that varies over the short term and examples thereof include the Web site 40 viewed by the viewer terminal 50, and · information about areas accessed by the viewer obtained from the access point number and position information of the access validation monitoring apparatus 80 and the purchase history 115 of the purchase history monitoring apparatus 110. The Web access history 95 is collected in the viewer behavior history file 122 from the viewed contents monitoring apparatus 90. Web service validation history 105 is collected in the viewer behavior history file 122 from the application monitoring apparatus 100. Purchase history 115 is collected in the viewer behavior history file 122 from the purchase history monitoring apparatus 110. Because a large volume of dynamic information is collected, when a set volume thereof is accumulated, older generation information is deleted using a first in first out system. Other information 118 is dynamic information and static information for various types of applications such as long distance communication business systems, portable communication business systems, and data center systems.

The viewer behavior analysis section 124 provides marketing information to customers based on the dynamic information and static information collected in the viewer behavior history file 122. For example, users accessing a specific area are obtained from position information and access point number information of the access validation monitoring apparatus 80. Users purchasing specific information or a specific product are obtained from the purchase history monitoring apparatus 110.

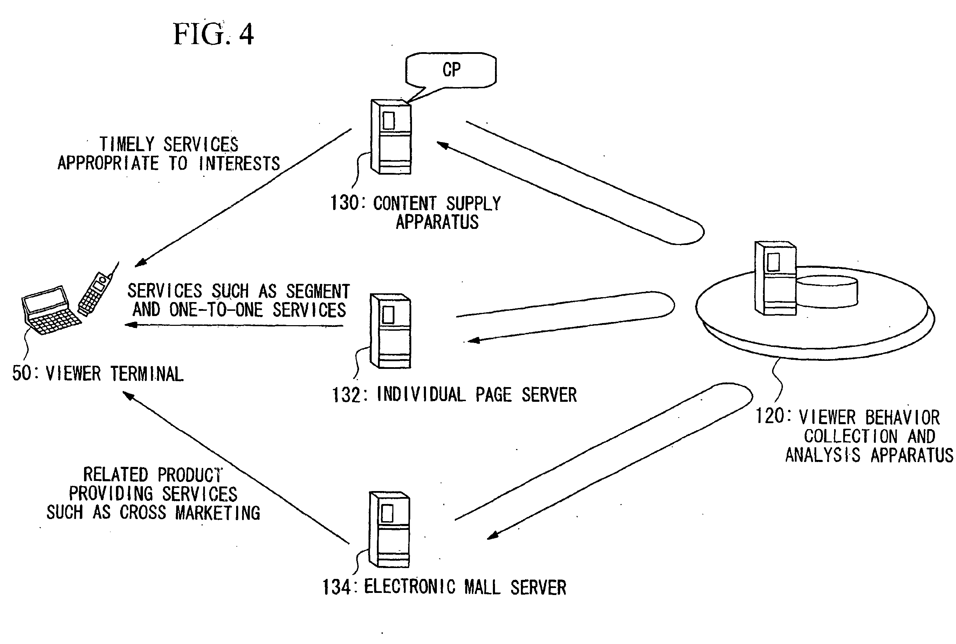

Fig. 4 is an explanatory view showing the supply of marketing information from the viewer behavior collection and analysis apparatus to the contents supply apparatus. The contents supply apparatus includes an individual page server 132 suitable for segment and one to one services, and an electronic mall server 134 suitable for related product supply services. In order to provide timely services that match the viewer's interests, the contents supply apparatus 130 requests the viewer behavior collection and analysis apparatus 120 for marketing information of customers having particular characteristics. Consequently, the viewer behavior collection and analysis apparatus 120 extracts the requested marketing information and delivers the contents supplied by the contents supply apparatus 130 to the viewer terminal 50 extracted by the viewer · behavior collection and analysis apparatus 120. The same operation as for the contents supply apparatus 130 also applies in the case of the individual page server 132 and the electronic mall server 134.

In this way, by retrieving viewer terminals 50 and 36 that have dynamic information corresponding to predetermined static information and static information corresponding to predetermined dynamic information, contents can be provided to the viewer terminals 50 and 36 of markets specified by the respective items of information. As a result, the contents supply apparatus 130 is able to provide useful contents that have been respectively customized for each to the viewer terminals 50 and 36 having specific user IDs and to the viewer terminals 50 and 36 that access the Web site 40 from access points in specific areas.

Moreover, based on the static information and dynamic information of the viewer terminals 50 and 36 that have accessed the Web site 40, it is also possible for a contents delivery validation apparatus to validate the delivery of the contents of the Web site 40 to the viewer terminals 50 and 36, and for the contents to be delivered from the Web site 40 in accordance with the result of the validation. For example, a contents delivery validation apparatus (not shown) makes a validation by checking user IDs, which is static information, of the viewer terminals 50 and 36 collected by the viewer behavior collection and analysis apparatus 120 in accordance with the access from the viewer terminals 50 and 36, and area information, which is dynamic information, obtained from the access points of the viewer terminals 50 and 36 against previously set user IDs and area information. Thereafter, predetermined services are provided from the Web site 40 to the validated viewer terminals 50 and 36.

By employing this method, if, for example, a member is validated by validating the viewer terminals 50 and 36 using only the user IDs, contents are delivered uniformly regardless of the area from which the viewer terminals 50 and 36 initiated the access. However, in the present invention; by also validating the area information from which the access was initiated by the viewer terminals 50 and 36, which is dynamic information, content can be delivered from the Web site 40 that are limited to members initiating an access from a specific area. As a result, the content supply apparatus 130 is able to safely and reliably provide customized content that is limited to viewer terminals having static information such as a specific user ID and dynamic information such as access area information for the areas from which the viewer terminals 50 and 36 initiated access. Moreover, it is also possible for the contents supply apparatus 130 to use the above described validation function, in which case the content supply apparatus 130 makes the validation request to the contents delivery validation apparatus for the viewer terminals 50 and 36 using the user IDs and area information. The content delivery validation apparatus then validates the area information for the viewer terminals 50 and 36 corresponding to the user IDs based on the validation request from the content supply apparatus 130. Notification of the validation result is given to the content supply apparatus 130 and the content supply apparatus 130 delivers contents to the viewer terminals 50 and 36 in accordance with the validation results.

Moreover, it is also possible for the above described retrieval function and validation function to be used by an Internet application server (not shown) connected to the viewer terminals 50 and 36 via the Internet. The Internet application server provides a variety of applications such as the delivery of images, the delivery of music and email. As a result, it is possible for an even greater variety of services to be provided to the viewer terminals 50 and 36.

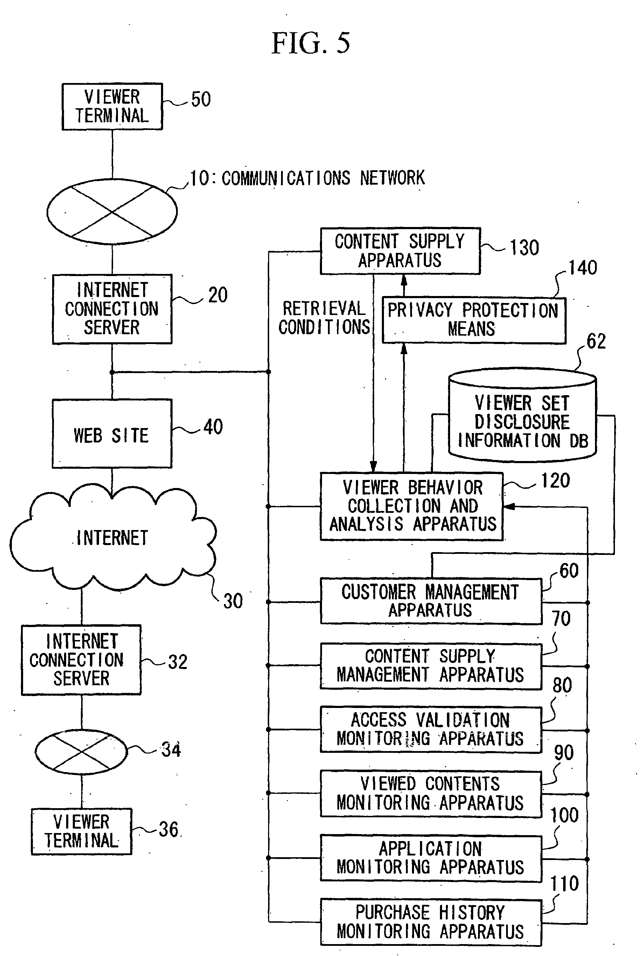

Fig. 5 is an explanatory view showing the supply of marketing information with special attention paid to the protection of privacy. In order to provide timely services appropriate to the interests of a viewer, the contents supply apparatus 130 requests the viewer behavior collection and analysis apparatus 120 for marketing information on customers that meet retrieval conditions. Subsequently, the viewer behavior collection and analysis apparatus 120 refers to a viewer set disclosure information database 62 and confirms the range of information that was permitted to be disclosed to third parties when the viewer completed the customer registration. A privacy protection apparatus 140 checks whether or not it is desirable for the information to be given as individual information about a viewer to a third party even if in the viewer set disclosure information database 62 the viewer considers disclosure of the information to be permitted. The viewer behavior collection and analysis apparatus 120 then retrieves the information from the customer management apparatus 60, the contents supply management apparatus 70, the access validation monitoring apparatus 80, the viewed contents monitoring apparatus 90, the application monitoring apparatus 100, and the purchase history monitoring apparatus 110, and confirms the extracted information in the viewer set disclosure information database 62 and the privacy protection apparatus 140. The marketing information is then supplied to the contents supply apparatus 130.

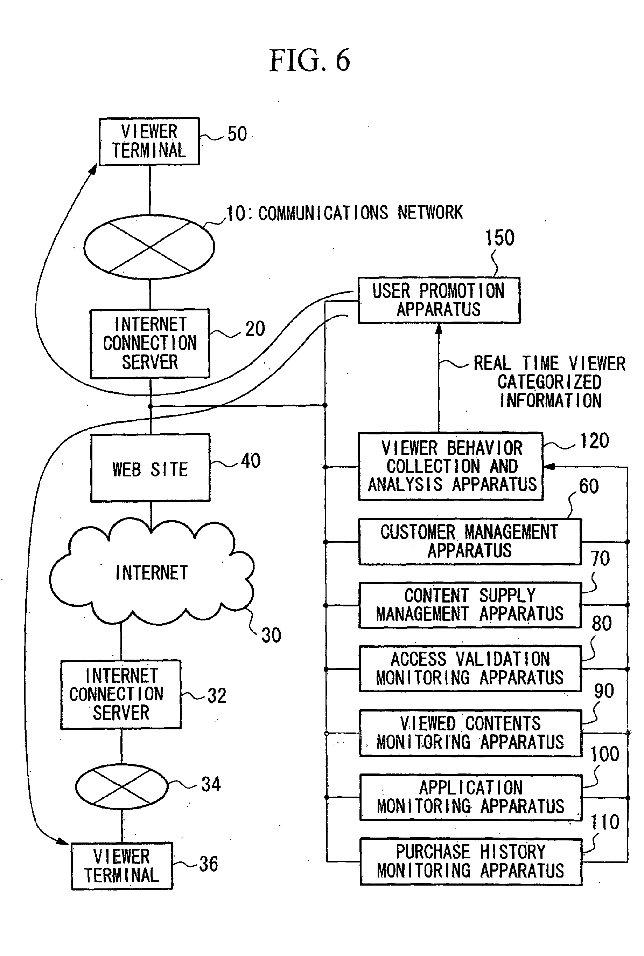

Fig. 6 is an explanatory view of a user promotion apparatus. The user promotion apparatus 150 is a server that provides sales promotion information to the viewer terminals 50 and 36 using marketing information sent to the contents supply apparatus 130 from the viewer behavior collection and analysis apparatus 130. The user promotion apparatus 150 delivers electronic mail of suitable promotion information to the viewer terminals 50 and 36 based on category information of the respective viewer terminals 50 and 36. The user promotion apparatus 150 also runs suitable promotions by encouraging a customer to view Web pages arranged to suit that customer.

It is to be understood that, in the above described embodiment, a description is given of when marketing information is extracted based on a viewer's history stored in a viewer behavior history file, however, the present invention is not limited to this and it is also possible for a structure to be employed in which marketing information is extracted in real time for a currently connected viewer terminal.

### INDUSTRIAL APPLICABILITY

As has been described above, according to the present invention, a customer management apparatus manages the customer registration data of a viewer terminal, a content supply management apparatus manages the content supply state relating to a Website, an access validation monitoring apparatus manages the Internet connection validation information of the viewer terminal, a viewed contents monitoring apparatus manages the Web site access history of the viewer terminal, a purchase history information management apparatus manages the purchase history information of the customer operating the viewer terminal, a viewer behavior collection and analysis apparatus collects attribute information that is created by associating static information of the viewer terminal accessing a Web site with dynamic information relating to the behavior of the viewer using the viewer terminal from a validation monitoring apparatus. Therefore, category information for each viewer terminal is obtained using the viewer behavior collection and analysis apparatus, and is adapted for an Internet service provider. Moreover, because the contents supply management apparatus receives the attribute information analyzed by the viewer behavior collection and analysis apparatus as marketing information, by collecting the connection time information, interests, and concerns of viewers viewing the Web site, processing this information, and then delivering the processed information to an optional medium, the efficient delivery of advertisements, promotion of sales, and marketing can be achieved.

Further, according to the present invention, a customer management apparatus manages the customer registration data for the viewer terminal, a contents supply management apparatus manages the contents supply state relating to a Web site, a viewed contents monitoring apparatus manages the Web site access history of the viewer terminal, and a viewer behavior collection and analysis apparatus collects attribute information that is created by associating static information of the viewer terminal accessing a Web site with dynamic information relating to the behavior of the viewer using the viewer terminal. Therefore, category information for each viewer terminal is obtained using the viewer behavior collection and analysis apparatus, and is adapted for the application service business.

Further, according to the present invention, a viewer behavior collection and analysis apparatus retrieves from the attribute information static information corresponding to dynamic information that meets preset retrieval conditions, and also retrieves from the attribute information dynamic information corresponding to static information that meets preset retrieval conditions. As a result, it is possible to provide useful services such as applications and content that have been customized for the viewer terminals of markets specified by the respective retrieved information items. In particular, by retrieving dynamic information such as area information for the area where a viewer terminal is located, businesses providing the above described services are able to provide their services effectively to viewer terminals located within a limited area.

Further, according to the present invention, by employing a structure in which a predetermined viewer terminal that is accessing the Web site is provided with content delivery validation means for validating the delivery of the contents of the Web site to the predetermined viewer terminal based on the static information and the dynamic information in the viewer terminal, it is possible to stably and reliably provide useful services such as customized applications and contents that are limited to viewer terminals that meet conditions that combine both static information about the viewer terminal and dynamic information about the behavior of the viewer of the viewer terminal. In particular, by making the validation based on dynamic information such as information on the area in which the viewer terminal is located in addition to the static information such as the user ID, viewer terminals having a specific member user ID can be further filtered using dynamic information such as the location information, enabling the business providing the above described services to provide an even higher quality service to even more thoroughly customized viewer terminals.

## Claims

1. A viewer history management apparatus for managing a state in which a viewer terminal having a browser function views a Web site to which it is connected via an Internet connection server, the viewer history management apparatus comprising:
customer management means for managing customer registration data relating to the viewer terminal;
content supply management means for managing content supply states relating to the Web site;
means for managing connection validation information relating to connections to the Internet by the viewer terminal;
viewed contents monitoring means for managing Web site access histories of the viewer terminal;
means for managing purchase history information of a customer operating the viewer terminal; and
viewer behavior collection and analysis means for collecting attribute information that is created by associating static information of the viewer terminal accessing the Web site with dynamic information relating to the behavior of the viewer of the viewer terminal from the connection validation information management means.

2. A viewer history management apparatus for managing a state in which a viewer terminal having a browser function views a Web site connected to the Internet, the viewer history management apparatus comprising:
customer management means for managing customer registration data relating to the viewer terminal;
content supply management means for managing content supply states relating to the Web site;
viewed contents monitoring means for managing Web site access histories of the viewer terminal;
means for managing purchase history information of a customer operating the viewer terminal; and
viewer behavior collection and analysis means for collecting attribute information that is created by associating static information of the viewer terminal accessing the Web site with dynamic information relating to the behavior of the viewer of the viewer terminal using at least one of the customer management means, the contents supply management means, the viewed contents monitoring means, and the purchase history monitoring means.

3. A viewer history management apparatus according to claim 1 or 2, wherein the viewer behavior collection and analysis means retrieves from the attribute information the static information corresponding to the dynamic information that meets predetermined retrieval conditions, and also retrieves from the attribute information the dynamic information corresponding to the static information that meets predetermined retrieval conditions.

4. A viewer history management apparatus according to claim 3, further comprising content supply means for delivering in accordance with the retrieval conditions surveys, electronic mail, advertisements, or predetermined content to the viewer terminals that correspond to the retrieved static or dynamic information.

5. A viewer history management apparatus according to any of claims 1 to 4, wherein a predetermined viewer terminal that is accessing the Web site is provided with content delivery validation means for validating a delivery of contents of the Web site to the predetermined viewer terminal based on the static information and the dynamic information in the viewer terminal.

6. A viewer history management apparatus according to any of claims 1 to 5, wherein Web sites currently being viewed by the viewer terminal are identified by the connection validation information management means.

7. A viewer history management method for managing a state in which a viewer terminal having a browser function views a Web site to which it is connected via an Internet connection server, in which:
customer registration data relating to the viewer terminal is registered in advance;
content supply states relating to the Web site are registered in advance;
connection validation information relating to connections to the Internet by the viewer terminal are managed;
Web site access histories of the viewer terminal are managed;
purchase history information of a customer operating the viewer terminal is managed; and
attribute information that is created by associating static information of the viewer terminal accessing the Web site with dynamic information relating to the behavior of the viewer of the viewer terminal is collected based on the connection validation information.

8. A viewer history management method for managing a state in which a viewer terminal having a browser function views a Web site connected to the Internet, in which:
customer registration data relating to the viewer terminal is registered in advance;
content supply states relating to the Web site are registered in advance;
Web site access histories of the viewer terminal are managed; and
attribute information that is created by associating static information of the viewer terminal accessing the Web site with dynamic information relating to the behavior of the viewer of the viewer terminal is collected from at least one of the customer registration data, the content supply states, and the Web site access history.

9. A viewer history management apparatus for providing attribute information of a viewer using a viewer terminal to a content supply apparatus that supplies contents of a WWW page to the viewer terminal via the Internet, comprising:
customer management means for managing customer registration data relating to the viewer terminal;
content supply management means for managing content supply states relating to the Web site;
means for managing connection validation information relating to connections to the Internet by the viewer terminal;
viewed contents monitoring means for managing Web site access histories of the viewer terminal;
means for managing purchase history information of a customer operating the viewer terminal; and
viewer behavior collection and analysis means for collecting attribute information that is created by associating static information of the viewer terminal accessing the Web site with dynamic information relating to the behavior of the viewer of the viewer terminal from the connection validation information management means.

10. A viewer history supply method for supplying attribute information of a viewer using a viewer terminal to a content supply apparatus that supplies contents of a WWW page to the viewer terminal via the Internet, in which:
customer registration data relating to the viewer terminal is registered in advance;
content supply states relating to the Web site are registered in advance;
connection validation information relating to connections to the Internet by the viewer terminal are managed;
Web site access histories of the viewer terminal are managed;
purchase history information of a customer operating the viewer terminal is managed; and
attribute information that is created by associating static information of the viewer terminal accessing the Web site with dynamic information relating to the behavior of the viewer of the viewer terminal is collected from the connection validation information management means.
